# FASCICULE DE BREVET EUROPEEN

(11) **EP 3 070 963 B1**
(45) Date de publication et mention de la délivrance du brevet: **07.06.2017**
(21) Numéro de dépôt: 16160880.7
(22) Date de dépôt: 17.03.2016
(51) Int. Cl.: H04R 17/02, H04R 7/04, G01L 9/08, H04R 7/24, H04R 19/00, H04R 19/04

(54) **CAPTEUR DE PRESSION DYNAMIQUE MEMS ET/OU NEMS A PERFORMANCES AMÉLIORÉES ET MICROPHONE COMPORTANT UN TEL CAPTEUR**
MEMS UND/ODER NEMS DRUCKSENSOR MIT VERBESSERTEN LEISTUNGEN UND DYNAMISCHES MIKROFON MIT EINEM SOLCHEN SENSOR.
MEMS AND/OR NEMS PRESSURE SENSOR WITH IMPROVED PERFORMANCES AND DYNAMIC MICROPHONE WITH SUCH A SENSOR.

(30) Priorité: 20.03.2015 FR 1552340
(43) Date de publication de la demande: 21.09.2016
(73) Titulaire: Commissariat à l'Énergie Atomique et aux Énergies Alternatives, 75015 Paris (FR)
(72) Inventeur: JOET, Loïc, 38640 CLAIX (FR)
(74) Mandataire: Brevalex

(56) Documents cités:
- WO-A1-2010/087816
- FR-A1- 2 983 844
- US-A1- 2014 247 954

## Description

### DOMAINE TECHNIQUE ET ÉTAT DE LA TECHNIQUE ANTÉRIEURE

La présente invention se rapporte à un capteur de pression dynamique microélectromécanique et/ou nanoélectromécanique à performances améliorées, et notamment à un microphone microélectromécanique et/ou nanoélectromécanique offrant des performances améliorées.

Des microphones sont mis en oeuvre dans un grand nombre d'applications grand public, telles que les téléphones, les tablettes tactiles, les appareils photos, les caméras, ....), et ces applications sont en pleine croissance.

Par ailleurs, certaines applications mettent en oeuvre plusieurs microphones.

Les microphones actuellement les plus utilisés sont les microphones à électret, mais les microphones microélectromécaniques, ou microphone MEMS, MEMS pour "microelectromechanical system" en terminologie anglo-saxonne, tendent à remplacer ces microphones à électret.

En effet, les microphones microélectromécaniques atteignent des performances compatibles avec bon nombre d'applications, sont adaptés à la production de masse, et présentent des coûts de fabrication extrêmement intéressants, puisque l'usinage d'une seule galette de silicium de 200mm de diamètre donne plusieurs dizaines de milliers de puces après découpage.

Parallèlement, on recherche à réaliser des microphones dont les performances requises ne cessent de croître. En effet, les nouvelles applications exigent plus de bande passante et/ou requièrent des seuils de détection plus bas. C'est par exemple le cas de la reconnaissance vocale ou des radars à ultra-son.

En outre, pour les applications énoncées ci-dessus, une grande miniaturisation est souhaitée, pour un gain de place et/ou une réduction du coût.

Les microphones MEMS actuellement produits sont presque exclusivement des microphones à détection capacitive, décrits par exemple dans le document A. Dehe : Silicon microphone development and application, Sensors and Actuators, A: Physical, A133 (2007), pp. 283-287*.*

Le microphone comporte une membrane souple se déformant sous l'effet du différentiel de pression entre ses deux faces. Une contre-électrode fixe, en regard de la membrane, forme un condensateur à capacité variable avec la membrane. La capacité varie en fonction de la déformation de la membrane, cette variation de capacité étant l'image de la différence de pression. La membrane se déforme dans une direction hors-plan, i.e. perpendiculairement au plan moyen du microphone

La contre-électrode comporte une multitude de trous. Ceux-ci ont pour but d'entraver au minimum la circulation de l'air et l'établissement de la pression lorsque la membrane se déplace.

Ces microphones donnent satisfaction dans l'ensemble mais ils présentent certains inconvénients.

La présence de la contre-électrode présente une résistance acoustique malgré l'existence de trous, qui engendre un bruit thermique, et donc une dégradation du seuil de détection, ainsi qu'un amortissement, et donc une réduction de la bande passante du microphone.

Pour limiter ces inconvénients, l'électrode arrière doit être ajourée au maximum. La surface des trous peut représenter 20% de la surface de la membrane. Mais il en résulte une réduction des surfaces en regard, ce qui réduit proportionnellement la détection capacitive. Ainsi le gain de la transduction sera réduit et le bruit de la partie électronique sera moins masqué, entraînant là aussi une dégradation du seuil de détection.

Afin d'atteindre des performances plus élevées, on peut envisager d'augmenter la surface de membrane et de la contre-électrode. Mais ceci a pour effet d'augmenter la taille de la puce portant le microphone et son coût.

En outre, une membrane plus grande déplace plus d'air en se déformant, cet air va s'opposer au déplacement de la membrane tel un ressort de rappel.

Cette raideur acoustique augmente comme le carré de la surface de la membrane.

Il existe un autre type de microphone décrit dans le document FR2963099 dans lequel un élément sensible se déplace dans le plan du microphone. La détection du déplacement de l'élément sensible se fait au moyen de jauges piézorésistives. Ce microphone ne met pas en oeuvre de contre-électrode.

Ce type de microphone est satisfaisant, néanmoins l'élément sensible présente une surface faible, ce qui limite ses applications hautes performances. Le document WO2010/087816 montre un capteur de pression dynamique de type MEMS.

### EXPOSÉ DE L'INVENTION

C'est par conséquent un but de la présente invention d'offrir un capteur de pression dynamique MEMS et/ou NEMS offrant des performances améliorées et un microphone MEMS et/ou NEMS offrant des performances améliorées.

Le but de la présente invention est atteint par un capteur de pression dynamique comportant un élément sensible ancré à un support, ledit élément étant mobile sous l'effet d'une variation de pression, l'élément sensible étant rigide et se déplaçant au moins en partie dans une direction hors-plan et comportant des moyens de détection de l'effort appliqué à l'élément sensible par la différence de pression.

Grâce à l'invention, d'une part les inconvénients résultant de la présence d'une contre-électrode sont supprimés. D'autre part, en réalisant un élément sensible dans le plan, il est possible de réaliser un élément offrant une grande surface. En outre, l'élément étant rigide il n'y a pas ou peu de perte d'énergie dans la déformation de l'élément.

On peut alors réaliser un microphone qui, à volume donné, offre des performances améliorées, ou à performances données, présente un encombrement moindre et un prix de revient réduit.

Les moyens de détection peuvent comporter au moins une jauge de contrainte, la au moins une jauge de contrainte étant avantageusement choisie parmi une jauge piézoélectrique, une jauge piézorésistive et une jauge résonante.

Dans un exemple particulièrement avantageux, l'élément sensible comporte une membrane et une structure de rigidification est appliquée sur une face de la membrane. Ainsi l'élément offre une inertie réduite tout en offrant la rigidité requise.

Avantageusement, l'élément sensible est ancré par une ou plusieurs poutres formant un ou des bras de levier et les moyens de détection piézorésistive sont couplés à la ou aux poutres. Ainsi l'effort vu par la ou les jauges est amplifié par rapport à celui vu par l'élément sensible.

Dans un mode de réalisation, tout l'élément sensible se déplace sensiblement parallèlement au support.

Dans un autre mode de réalisation, l'élément sensible est articulé en rotation par rapport au support autour d'un axe contenu dans le plan du capteur.

La présente invention a alors pour objet un capteur de pression dynamique de type MEMS et/ou NEMS comportant un support et au moins un élément sensible rigide ancré au support par au moins une zone d'ancrage, ledit élément sensible comportant des première et deuxième faces parallèles destinées à être soumises à des pressions, ledit élément sensible étant apte à avoir un déplacement hors-plan par rapport au support dans une direction de détection sous l'effet d'une différence de pression entre les première et deuxième faces, le capteur de pression dynamique comportant également des moyens de détection d'un effort appliqué à l'élément sensible par la différence de pression.

De manière préférée, l'élément sensible comporte une membrane et une structure de rigidification solidarisée à la membrane de sorte à la rigidifier.

La structure de rigidification peut-être tout ou partie disposée (formée ou reportée) sur la membrane. Ainsi cette structure peut comporter des éléments disposés entièrement sur la membrane et/ou des éléments solidarisés localement à la membrane notamment lorsque cette structure comporte au moins un élément parallèle à la membrane et des piliers permettant de solidariser localement l'élément à ladite membrane, ces piliers étant répartis entre ledit élément et la membrane de sorte à permettre de rigidifier cette dernière

Par exemple, la membrane a une épaisseur de quelques dizaines de nanomètres à quelques centaines de nanomètres et avantageusement comprise entre 100 nanomètres et 500 nanomètres. Les moyens de rigidification peuvent avoir une épaisseur de quelques micromètres à quelques dizaines de micromètres et avantageusement de 5 µm à 30 µm.

Dans un exemple de réalisation, l'élément sensible peut être ancré au support par des moyens d'ancrage comportant au moins une poutre articulée en rotation sur le support par une articulation dont l'axe de rotation est parallèle au plan du capteur. De préférence, la poutre est alors fixée sur l'élément sensible de sorte que l'élément sensible se déplace en rotation par rapport au support autour dudit axe de rotation.

Dans un autre exemple de réalisation, les moyens d'ancrage comportent plusieurs poutres parallèles les unes aux autres. Avantageusement, la ou les poutres forment également au moins une partie de la structure de rigidification.

La poutre peut également être articulée en rotation et translation sur l'élément mobile par une articulation supplémentaire dont l'axe de rotation et l'axe de translation sont parallèles au plan du capteur.

Avantageusement, les moyens d'ancrage comportent plusieurs poutres disposées de sorte à limiter des mouvements de l'élément sensible dans des directions différentes de la direction de détection.

Les moyens de détection piézorésistive peuvent comporter un ensemble comprenant au moins une jauge située au niveau de l'articulation entre la au moins une poutre et le support et suspendue entre la poutre et le support, la jauge étant décalée selon une direction perpendiculaire au plan, par rapport à l'axe de rotation.

De préférence, les moyens de détection piézorésistive comportent deux ensembles d'au moins une jauge piézorésistive, lesdits ensembles étant montés en différentiel.

De manière avantageuse, l'ensemble ou les ensembles comportent plusieurs jauges pouvant être disposées parallèlement les unes par rapport aux autres et connectées électriquement en série.

En outre, le capteur de pression dynamique peut comporter des moyens de blocage aptes à au moins limiter des mouvements de l'élément sensible dans des directions différentes de la direction de détection. Ces moyens de blocage peuvent être utilisés seuls ou en combinaison avec les poutres des moyens d'ancrage.

La membrane peut être rattachée en des zones discrètes au support par des éléments offrant une rigidité importante dans les directions autres que la direction de détection. Les éléments sont par exemple d'un seul tenant avec la membrane et présentent une dimension transversale de quelques centaines de nm.

Par exemple, les moyens de rigidification comportent des poutres réparties sur la membrane. De préférence, les moyens de rigidification comportent des poutres disposées au ras des bords de la membrane.

L'élément sensible peut être séparé au moins en partie du support par gravure, avantageusement par gravure profonde par ions réactifs.

La présente invention a également pour objet un microphone comportant au moins un capteur de pression selon l'invention. L'élément sensible peut présenter avantageusement une rigidité telle que le premier mode propre de déformation de l'élément sensible est repoussé au-dessus de la fréquence de résonance du microphone, qui est elle-même repoussée au-dessus de la bande passante souhaitée pour le fonctionnement du microphone.

### BRÈVE DESCRIPTION DES DESSINS

La présente invention sera mieux comprise sur la base de la description qui va suivre et des dessins en annexe sur lesquels:
- la figure 1 est une vue en perspective d'un exemple de réalisation d'un microphone selon un premier mode de réalisation,
- la figure 2A est une vue de détail de la figure 1 au niveau d'une articulation entre la poutre et le support, l'élément sensible étant supprimé,
- la figure 2B est une vue de détail de la figure 1 au niveau d'une articulation entre la poutre et l'élément sensible,
- la figue 3 est une vue de l'élément sensible de la figure 1 seul,
- la figure 4 est une vue en perspective d'un autre exemple de réalisation d'un microphone selon un premier mode de réalisation,
- la figure 5 est une vue en perspective d'un autre exemple de réalisation d'un microphone selon un premier mode de réalisation,
- les figures 6A et 6B sont des vues en perspective de dessus et de dessous respectivement d'un autre exemple de réalisation d'un microphone selon un premier mode de réalisation comportant une seul poutre formant bras de levier,
- la figure 7 est une vue en perspective d'une variante du microphone des figures 6A et 6B,
- la figure 8A est une vue en perspective d'un exemple de réalisation d'un microphone selon un deuxième mode de réalisation,
- la figure 8B est une vue de détail de la figure 8A au niveau d'une articulation,
- la figure 9 est une représentation schématique d'un exemple avantageux des moyens de détection à jauges de contrainte pouvant être mis en oeuvre dans un microphone selon l'invention,
- les figures 10A à 10L sont des représentations schématiques de différentes étapes d'un exemple de procédé de réalisation d'un microphone selon l'invention.

### EXPOSÉ DÉTAILLÉ DE MODES DE RÉALISATION PARTICULIERS

La description qui va suivre portera principalement sur un microphone, mais il sera compris que la présente invention s'applique plus généralement à un capteur de pression.

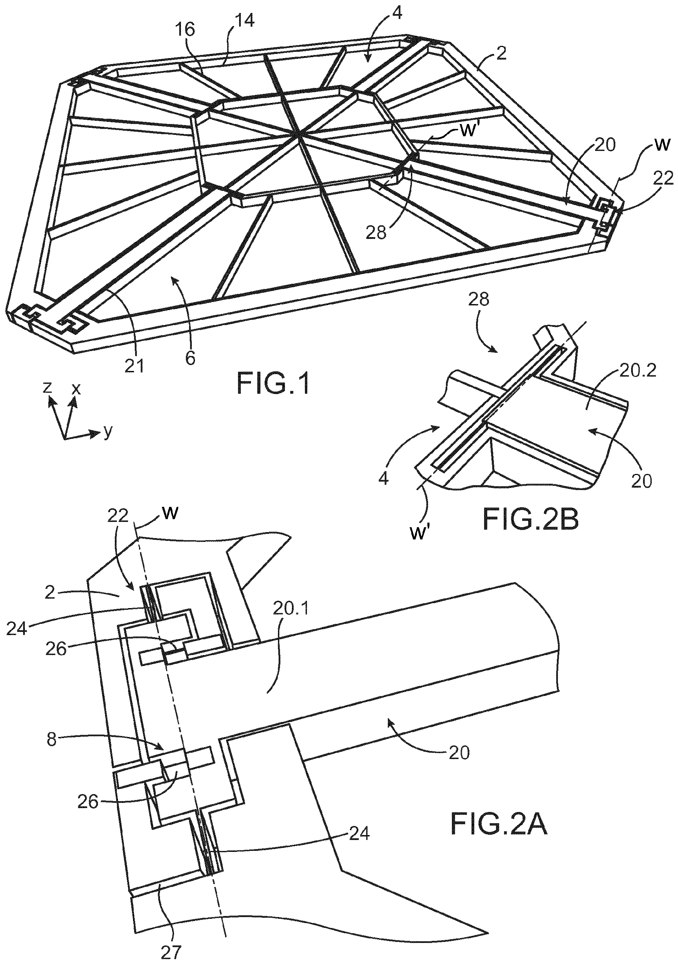

Sur la figure 1, on peut voir une vue en perspective de dessus d'un exemple de réalisation d'un microphone MEMS selon un premier mode de réalisation à déplacement principalement en translation dans une direction perpendiculaire au plan du microphone. Le microphone comporte un support 2, un élément sensible 4 mobile par rapport au support 2 et des moyens d'ancrage 6de l'élément sensible 4 au support 2. Le microphone comporte également des moyens de détection 8 de l'effort appliqué à l'élément sensible par la différence de pression.

Les moyens de détection peuvent comporter au moins une jauge de contrainte, avantageusement choisie parmi une jauge piézoélectrique, une jauge piézorésistive et une jauge résonante.

Dans l'exemple de la figure 1, des moyens de détection piézorésistif sont considérés.

Dans la présente demande, on entend par "ancrage", le fait de relier mécaniquement l'élément sensible au support tout en permettant à l'élément sensible de se déplacer par rapport au support selon au moins une direction utile à la détection.

Le microphone s'étend dans le plan XY, dit plan du microphone, et l'élément sensible 4 est apte à se déplacer le long de la direction Z.

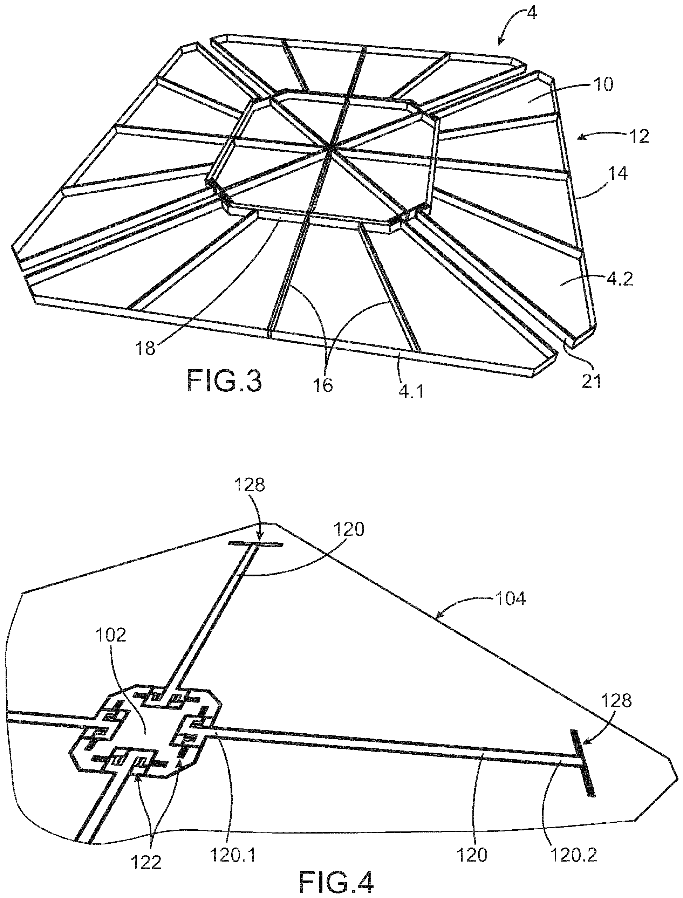

L'élément sensible comporte une première face 4.1 et une deuxième face 4.2 opposée à la première face 4.1 et s'étendant dans la plan XY (figure 3)

La différence de pression s'applique entre les première 4.1 et deuxième 4.2 surfaces provoquant le déplacement le long de la direction Z de l'élément sensible.

L'élément sensible présente avantageusement une très grande surface, permettant de récupérer un signal maximal et de masquer au moins en partie les bruits en aval.

L'élément sensible présente une certaine rigidité par rapport aux différences de pression auxquelles il est soumis.

Selon la présente invention, on entend par "élément sensible rigide", un élément dont les déformations en conditions normales d'utilisation du microphone ont un effet négligeable sur la détection, c'est-à-dire que l'énergie perdue dans la déformation de l'élément est négligeable devant l'énergie récoltée pour déformer la ou les jauges piézoélectriques.

Pour cela, l'élément est avantageusement tel que le premier mode propre de déformation de l'élément est repoussé au-dessus de la fréquence de résonance du microphone et avantageusement au moins un ordre de grandeur au-dessus de la fréquence de résonance du microphone, qui est elle-même repoussée au-delà de la bande passante souhaitée pour le fonctionnement du microphone.

A titre d'exemple, pour un microphone résonant vers 20kHz, l'élément est tel que le premier mode est repoussé au-dessus de 60 kHz, avantageusement au de-dessus de 100 kHz, très avantageusement au-dessus de 200kHz. La rigidité de l'élément sensible est déterminée par les dimensions de l'élément sensible et par le ou les matériaux mis en oeuvre dans sa réalisation.

Ainsi l'élément sensible 4 qui est rigide au sens de l'invention ne se déforme pas ou peu sous l'effet de la différence pression.

Dans l'exemple représenté et de manière très avantageuse, l'élément sensible comporte une membrane 10 présentant par exemple une épaisseur de l'ordre d'une centaine de nanomètres ou de quelques centaines de nanomètres et des moyens 12 pour assurer la rigidification de la membrane. Ces moyens de rigidification sont par exemple formés par une structure de poutres s'étendant sur l'une des faces de la membrane et quadrillant la face de la membrane. Dans l'exemple représenté, la membrane a une forme sensiblement carrée. Les moyens de rigidification comportent des poutres 14 bordant le bord extérieur de la membrane 10 et formant ainsi un cadre, des poutres 16 s'étendant du centre de la membrane vers l'extérieur de manière sensiblement radialement et des poutres 18 formant un cadre intermédiaire reliant les poutres radiales 16 entre elles. Cette configuration des moyens de rigidification est particulièrement adaptée à la disposition des poutres formant bras de levier qui sera décrite ci-dessous.

Il sera compris que d'autres structures peuvent convenir à la rigidification de la membrane.

Les poutres ont par exemple une épaisseur de quelques dizaines de micromètres, et une largeur de quelques centaines de nanomètres à quelques micromètres.

L'élément sensible comprenant une membrane et des moyens de rigidification présente alors l'avantage d'avoir une faible masse et donc une faible inertie, et de permettre la collecte d'une grande quantité de signal grâce à une grande surface.

Alternativement, l'élément sensible pourrait être formé par une plaque présentant une épaisseur telle que l'élément sensible aurait une rigidité suffisante, néanmoins il offrirait une plus grande inertie.

De manière très avantageuse, l'élément sensible est libérée du support sauf au niveau des moyens d'ancrage ainsi il agit sensiblement comme un piston et non comme une membrane déformable, de l'énergie n'est alors plus perdue dans la déformation de la membrane. En outre, le fait de ne plus utiliser la déformation d'une membrane pour transmettre un effort permet de pouvoir utiliser un élément sensible ayant une forme quelconque.

De l'air s'écoule entre le bord extérieur de l'élément sensible et le support. Avantageusement, la structuration de l'élément sensible est réalisée par gravure ionique ce qui permet d'obtenir une gravure fine sur une profondeur importante. Cette gravure fine limite le passage de l'air, augmente la résistance acoustique associée, et donc réduit le bruit acoustique et la fréquence de coupure basse du microphone. De manière avantageuse, les poutres de rigidification 14 formant cadre sont disposées au ras des bords extérieurs de la membrane et coopèrent avec le bord du support pour allonger le chemin d'écoulement de l'air entre l'élément sensible et le support, le chemin présente alors une résistance acoustique plus grande, ce qui réduit encore davantage le bruit acoustique et la fréquence de coupure basse.

Dans l'exemple représenté, l'élément sensible est ancré au support en quatre zones d'ancrage situées aux quatre sommets de l'élément sensible. Les moyens assurant l'ancrage de l'élément sensible au support comporte quatre poutres 20 alignées deux à deux sur les diagonales de l'élément sensible et articulées sur le cadre intermédiaire et le support 2.

Les poutres sont logées dans des logements radiaux 21ménagés dans l'élément sensible. Les poutres 20 sont avantageusement réalisées simultanément à l'élément sensible.

Les poutres sont articulées par une extrémité longitudinale 20.1 sur le support et par une autre extrémité longitudinale 20.2 sur la membrane. Sur la figure 3, on peut voir l'élément sensible seul sans les poutres 20.

Les poutres de rigidification 16 bordant les logements 21 des poutres 20 sont avantageusement disposées au ras de la membrane entourant les poutres 20 pour allonger le chemin d'écoulement de l'air.

Sur la figure 2A, on peut voir une vue de détail d'une articulation 22 entre l'extrémité longitudinale 20.1 de la poutre 20 et le support 2. L'articulation 22 est une liaison pivot d'axe W parallèle au plan XY du capteur. Dans l'exemple représenté, l'articulation est formée par deux lames 24 s'étendant dans la direction Z et aptes à se déformer en torsion autour de l'axe W.

De manière très avantageuse, au moins l'une des poutres d'ancrage 20 sert pour la détection de la différence de pression appliquée à l'élément sensible. En effet elle transmet l'effort entre l'élément sensible 4 et les moyens de détection piézorésistive 8. De manière très avantageuse, la poutre 20 forme un bras de levier transmettant l'effort appliquée à l'élément sensible 4 de manière amplifiée aux moyens de détection 8.

Dans l'exemple représenté et de manière avantageuse, les moyens de détection associés à une poutre 20 comportent deux jauges de contrainte piézorésistives 26 disposées de part et d'autre de la poutre 20 et montées en différentielle. Le montage en différentielle est avantageux en termes de bruit, de dérive en température et de non linéarités. Mais des moyens de détection ne mettant en oeuvre qu'une seule jauge ne sortent pas du cadre de la présente invention.

Chaque jauges 26 s'étend parallèlement à la poutre 20 et est ancrée sur le support 2 et sur la poutre 20 de sorte à être excentrée par rapport à l'axe de rotation W et ainsi être soit comprimée, soit étirée lors du déplacement de la poutre.

Dans l'exemple représenté, les jauges sont ancrées sur le support via des plots 27 qui sont gravés dans la même couche que le support et les bras, ils sont cependant isolés électriquement du support par une découpe 21, afin de permette la lecture des jauges.

En variante, on peut envisager de disposer les jauges au niveau de l'articulation entre la poutre et l'élément sensible en plus ou à la place des jauges 26.

Dans le cas où l'élément sensible 4 aurait un déplacement différent de celui des bras 20, le microphone comporte de manière très avantageuse, des moyens transmettant le déplacement le long de la direction Z de l'élément sensible 4 au bout de la poutre 20.2 Ces moyens, avantageusement réalisés par des lames verticales 28 (figure 2B), reliant le bras à l'élément sensible, présentent une grande raideur dans la direction Z et une plus grande souplesse dans des directions transversales. Dans l'exemple représenté, les lames s'étendent de part et d'autre du bras par rapport à son axe longitudinal et perpendiculairement à celui-ci. Les moyens transmettant le déplacement le long de la direction Z de l'élément sensible 4 pourraient ne comporter qu'une lame.

Des moyens de détection 8 peuvent être prévus au niveau de l'articulation 22 d'une poutre, d'une partie des poutres ou de toutes les poutres.

Le fonctionnement du microphone de la figure 1 va maintenant être décrit.

Lorsqu'une différence de pression s'établit entre les faces 4.1 et 4.2 de l'élément sensible 4, un effort est appliqué à l'élément sensible selon la direction Z vers le haut ou vers le bas. Chaque poutre 20 pivote alors autour de l'axe W transmettant l'effort amplifié aux jauges de contrainte 26 situées au niveau des articulations 22 entre le support et les poutres. Les jauges sont alors sont soit comprimées, soit étirées, elles changent alors de résistance par effet piézorésistif. La mesure de variation de résistance des jauges indique la différence de pression appliquée à l'élément sensible.

Grâce à l'invention, quasiment tout l'effort appliqué à l'élément sensible par la différence de pression entre ses faces 2.1, 2.2, hormis les pertes dues à la raideur des articulations, est transmis aux jauges, puisqu'il n'y a pas ou peu de perte dans la déformation de l'élément sensible. En outre, l'élément sensible peut présenter une grande surface puisqu'il présente une inertie réduite, et ainsi offrir des performances améliorées ou, inversement, avoir une surface réduite et donc un encombrement réduit, avec des performances identiques.

Sur la figure 4, on peut voir un autre exemple de réalisation d'un microphone selon le premier mode de réalisation dans lequel le support 102 est situé au centre du microphone et l'élément sensible 104 entoure le support 102. Les moyens d'ancrage 106 sont également formés par quatre poutres articulées en rotation par une extrémité 120.1 sur le support 102 par des articulations 122 et par une autre extrémité 120.2 sur l'élément sensible 104 par des articulations 128. Les articulations 122 et 128 peuvent être identiques ou similaires aux articulations 22 et 28 décrites ci-dessus.

Les moyens de détection piézorésistive sont avantageusement prévus au niveau de l'articulation 122 entre le support 102 et les poutres 120 pour profiter d'une amplification maximale de l'effort appliqué à la membrane.

Dans cette représentation, les moyens de rigidification n'ont pas été représentés, mais ils peuvent présenter la même structure que celle des moyens de rigidification de la figure 1.

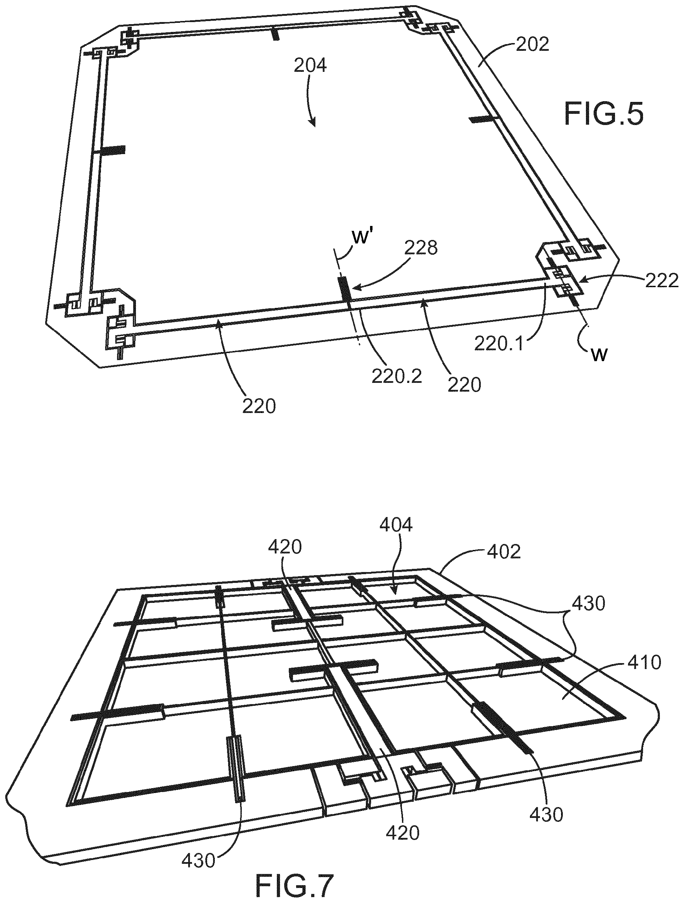

Sur la figure 5, on peut voir encore un autre exemple de réalisation selon le premier mode de réalisation dans lequel les poutres d'ancrage s'étendent le long des bords de l'élément sensible. L'élément sensible 204 comporte avantageusement une membrane et des moyens de rigidification (non représentés).

Les moyens d'ancrage comportent huit poutres 220 s'étendant par paire parallèlement à un bord de l'élément sensible, chaque poutre 220 d'une paire étant articulée par une première extrémité longitudinale 220.1 au support 202 au moyen d'une articulation 222 et par une deuxième extrémité longitudinale 220.2 sur l'élément sensible 204 au moyen d'une articulation 228.

L'articulation 222 entre la poutre 220 et le support est par exemple similaire à l'articulation 22 du microphone de la figure 1, l'axe de rotation W étant perpendiculaire au bord de l'élément sensible. L'articulation 228 entre la poutre 220 et l'élément sensible est par exemple formé par une lame apte à se déformer en flexion et rotation autour d'un axe parallèle à l'axe W.

Dans l'exemple représenté, chaque bord est relié au support par deux poutres 220 parallèles dont les deuxièmes extrémités longitudinales 220.1 sont en regard et sont articulées sur l'élément sensible 204 sensiblement au centre du bord de l'élément sensible 204.

Les moyens de détection à jauge de contrainte peuvent être situés au niveau d'une ou plusieurs articulations 222.

Lorsque que l'élément sensible se déplace hors plan le long de la direction Z, les deux poutres 220 reliant un bord au support présente une inclinaison opposée. La mise en oeuvre de poutres perpendiculaires permet de bloquer les translations dans la plan XY et la rotation autour de l'axe Z.

En variante, on pourrait alors prévoir plus de deux poutres par bord ou qu'une poutre par bord, elle s'étendrait sur toute ou partie de la longueur du bord de l'élément sensible. Par exemple, chaque poutre relierait une extrémité du bord de l'élément sensible à l'extrémité opposée du bord du support. On peut envisager en variante que les poutres ne s'étendent pas sur toute la longueur des côtés. Le dispositif ne comporterait alors que quatre poutres d'ancrage.

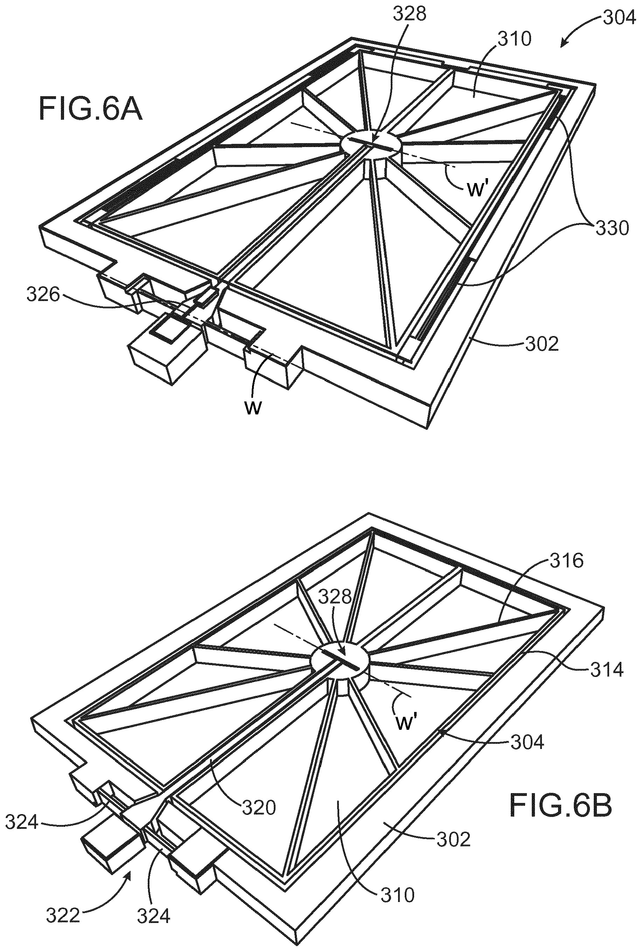

Sur la figures 6A et 6B, on peut voir un autre exemple de réalisation d'un microphone selon le premier mode de réalisation, vu de dessus et de dessous respectivement. Les moyens d'ancrage comportent un élément sensible 304 comprenant une membrane et des moyens de rigidification représentés en transparence à travers la membrane. Les moyens de rigidification comportent un cadre 314 délimitant les bords extérieur de l'élément sensible et des poutres 316 disposées radialement à partir du centre de l'élément sensible 304.

Le microphone comporte également des moyens d'ancrage qui comprennent une poutre 320 articulée sur un bord du support 302 et sur les moyens de rigidification. Les moyens d'ancrage comportent également des moyens additionnels pour limiter le déplacement de l'élément sensible en translation dans le plan et la rotation autour de Z puisque la poutre 320 seule ne peut pas limiter ces mouvements.

Dans cet exemple et de manière très avantageuse, la membrane 310 est partiellement détourée, i.e. la membrane est encore reliée en certaines zones au support par des portions 330 de membrane 310 reliant l'élément sensible au support. Dans l'exemple représenté, des portions 330 s'étendent parallèlement aux bords de l'élément sensible. Les dimensions et dispositions des portions 330 sont telles qu'elles limitent, voire interdisent, les mouvements de l'élément sensible non désirés, i.e. les translations dans le plan de l'élément sensible et la rotation autour de l'axe Z. Ces portions présentent en revanche une raideur négligeable dans la direction Z devant celle de la ou des jauges de détection, ainsi le mouvement utile servant à la détection n'est pas gêné. Ces éléments peuvent être réalisés par des nanofils de quelques centaines de nanomètres de largeur, une microbande de quelques dizaines de micromètres de largeur ou tout autre dispositif intermédiaire.

De manière similaire aux exemples déjà décrits, l'articulation 322 entre la poutre et le support comporte des lames 324 déformables en torsion, similaires à celles de l'articulation 22, et l'articulation 328 entre la poutre 320 et le support 302 peut être identique à l'articulation 28.

Dans cet exemple de réalisation, les moyens de détection comportent une seule jauge 326 alignée avec l'axe de la poutre et suspendue entre la poutre et le support. La jauge est désaxée par rapport à l'axe de rotation W de sorte à être étirée ou compressée lors du déplacement de la poutre. Plusieurs jauges pourraient être mises en oeuvre.

Cet exemple est particulièrement avantageux du fait de sa structure simple.

Sur la figure 7, on peut voir une variante du dispositif des figures 6A et 6B, celle-ci diffère du dispositif des figures 6A et 6B en ce qu'il comporte deux poutres d'ancrage 420 alignées l'une avec l'autre et articulées chacune sur un bord opposé du support 402. Des moyens pour limiter les déplacements non utiles de l'élément sensible sont également avantageusement prévus, ils peuvent être formés par des portions de membranes. Dans l'exemple représenté, les portions 430 s'étendent perpendiculairement aux bords de l'élément sensible 404 et aux bords du support 402. Par exemple, ils sont au nombre de deux par bords. Ils présentent une raideur négligeable dans la direction hors-plan et n'entrent pas en concurrence avec la ou les jauges de détection. Le nombre et les dimensions des portions de membrane entre le support et l'élément sensible sont choisis pour ne pas gêner le déplacement de l'élément sensible dans la direction de détection.

Sur la figure 7, l'élément sensible comporte une membrane 410 et des moyens de rigidification formés de poutres se croisant à angle droit de sorte à former un quadrillage.

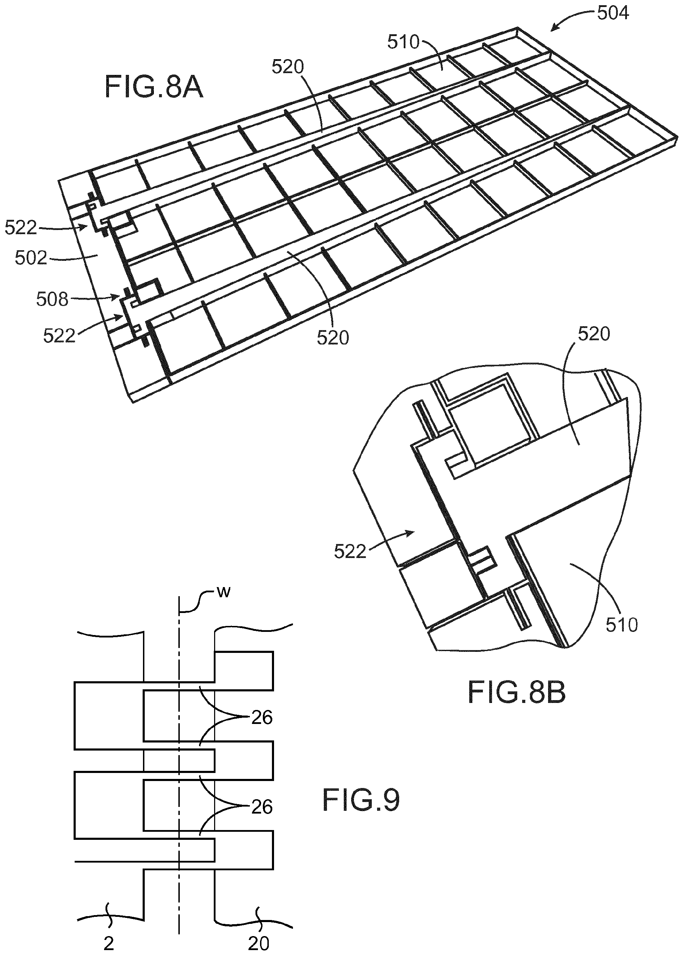

Sur les figures 8A et 8B, on peut voir un exemple de réalisation d'un dispositif selon un deuxième mode de réalisation, qui diffère du premier mode de réalisation en ce que l'élément sensible a un déplacement principalement en rotation autour d'un axe parallèle au plan et non sensiblement parallèlement au plan du microphone le long de l'axe Z.

Le microphone comporte un élément sensible 504 articulé en rotation par rapport à un support 502 par un bord. Dans l'exemple représenté, l'élément sensible 504 a une forme rectangulaire. Dans l'exemple représenté, le microphone comporte deux poutres et deux articulations 522 d'axe de rotation W parallèle plan XY par lesquelles l'élément sensible est ancré au support.

Les articulations 522 sont similaires aux articulations 22 décrites ci-dessus.

De manière très avantageuse, les poutres 520 sont d'un seul tenant avec les moyens de rigidification et font donc partie des moyens de rigidification, ce qui simplifie le procédé de réalisation.

Dans l'exemple représenté, l'élément sensible comporte une membrane 510 et des moyens de rigidification.

Le microphone comporte également des moyens de détection 508 similaires à ceux décrits ci-dessus, ils comportent une ou plusieurs jauges de contrainte excentrées par rapport à l'axe de rotation W de l'élément sensible par rapport au support. Grâce au bras de levier, l'effort appliqué à l'élément sensible par la différence de pression est amplifié et s'applique sur les jauges de contraintes.

Les efforts vus par les jauges de contraintes sont d'autant plus grands que les jauges sont proches de l'axe de rotation en considérant la direction Z.

Dans l'exemple représenté, les poutres présentent une section variable, plus particulièrement une section qui décroit lorsque l'on s'éloigne des articulations 522. L'inertie de l'élément sensible est ainsi réduite. Le fonctionnement du microphone des figures 8A et 8B va maintenant être décrit.

Lorsqu'une différence de pression s'applique entre les deux faces de l'élément sensible 504, un effort s'applique sur l'élément sensible qui provoque sa rotation autour de l'axe W vers le haut ou vers le bas suivant la direction de l'effort.

L'effort appliqué à l'élément sensible est transmis aux jauges situées au niveau des articulations 522, celui-ci est amplifié grâce à l'effet bras de levier. Les jauges sont alors comprimées ou étirées, elles changent alors de résistance par effet piézorésistif. La mesure de variation de résistance des jauges indique la différence de pression appliquée à l'élément sensible. L'élément sensible a alors un mouvement hors plan mais celui-ci n'est pas parallèle au plan de l'élément sensible.

Un microphone ne comportant qu'une seule articulation 522 et donc une seule poutre et un microphone avec plus de deux poutres 520 et plus de deux articulations 522 ne sortent pas du cadre de la présente invention.

Les jauges peuvent présenter toutes formes. Leurs formes et leurs dimensions sont néanmoins de préférence choisies pour réduire le bruit de Flicker, tenir compte des contraintes de flambage et présenter une résistance adéquate

Sur la figure 9, on peut voir une réalisation particulièrement avantageuse des moyens de détection comportant une pluralité de jauges 26 disposées parallèlement les unes aux autres par exemple au niveau de la ou des articulations entre la poutre 20 et le support 2 et connectées électriquement en série. On prévoit d'isoler électriquement les jauges de la ou des poutres et/ou des moyens de rigidification. Ceci peut être facilement réalisé grâce à la couche d'oxyde d'un substrat silicium sur isolant ou SOI ("Silicon on insulator" en terminologie anglo-saxonne) permettant une tenue mécanique sans contact électrique. En variante, on peut aussi utiliser le dopage pour assurer l'isolation électrique par diode PN : la jauge serait alors dopée P et entourée d'un mur d'isolation de dopé N, pour la séparer du reste de la couche, dopée P. Un dopage inverse peut être utilisé.

En mettant en oeuvre un grand nombre de jauges, on augmente la résistance électrique et on augmente le nombre de porteurs. En outre, on peut réaliser des jauges plus courtes aptes à résister au flambage.

Dans l'exemple de la figure 9, les jauges sont avantageusement réalisées d'un seul tenant par gravure.

Dans tous les exemples de réalisation, les moyens de détection pourraient être choisis des moyens de détection piézoélectrique, des moyens de détection piézorésistive et des moyens de détection à jauge résonante.

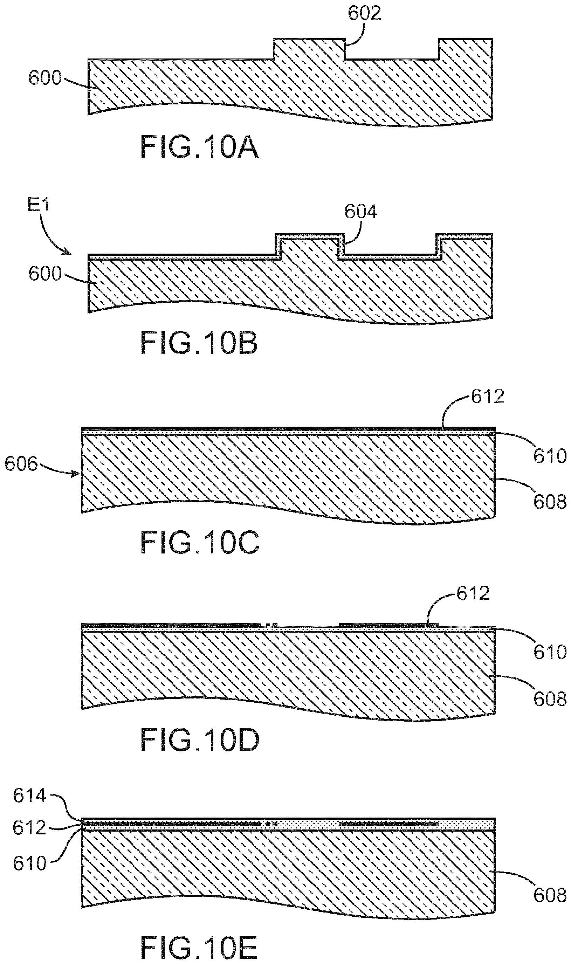

Un exemple d'un procédé de réalisation d'un microphone selon l'invention va être décrit à l'aide des figures 10A à 10L.

Cet exemple de procédé utilise un substrat semi-conducteur 600, par exemple en silicium, mais un substrat dans une autre matière non semi-conductrice telle que le verre, le quartz, ...pourrait être utilisé.

Lors d'une première étape, on effectue une photolithographie puis une gravure, par exemple par ions réactifs, pour former un évidement 602 dans une face du substrat 600, ainsi que des piliers destinés à soutenir les parties fixes du MEMS.

Avantageusement, la gravure a lieu sur une épaisseur de quelques microns.

L'élément ainsi réalisé est représenté sur la figure 10A.

Lors d'une étape suivante, on forme une couche d'oxyde 604 sur la face gravée du substrat 600, par exemple par oxydation thermique ou par dépôt. Cette couche d'oxyde 604 est destinée à former une couche d'arrêt pour la gravure finale. Avantageusement, l'épaisseur de la couche 604 est de l'ordre du µm.

L'élément E1 ainsi réalisé est représenté sur la figure 10B. L'élément E1 est destiné à former un socle pour le microphone.

Lors d'une étape suivante, on utilise un substrat SOI 606 représenté sur la figure 10C. Un substrat SOI comporte du silicium bulk 608, une couche d'oxyde 610 et une couche de silicium 612 en face avant. La couche d'oxyde 610 a avantageusement une épaisseur de quelques microns.

La ou les jauges et la membrane seront formées dans la couche 612, son épaisseur donnera donc l'épaisseur des jauges et de la membrane. L'épaisseur de la couche 612 est avantageusement de quelques centaines de nanomètres.

L'élément ainsi réalisé est représenté sur la figure 10C.

Lors d'une étape suivante, on réalise une photolithographie puis une gravure, par exemple par gravure par ions réactifs, pour définir les jauges, leurs attaches et la membrane dans la couche 612

L'élément ainsi réalisé est représenté sur la figure 10D.

Lors d'une étape suivante, on forme une couche d'oxyde 614 par exemple par dépôt, son épaisseur est suffisante pour noyer la couche de silicium gravée 612.

Une étape d'aplanissement, par exemple par polissage mécano-chimique, peut ensuite avoir lieu.

L'élément ainsi réalisé est représenté sur la figure 10E.

Lors d'une étape suivante, on réalise une photolithographie puis une gravure, par exemple par ions réactifs, des couches 614 et 610 avec arrêt sur le substrat 608.

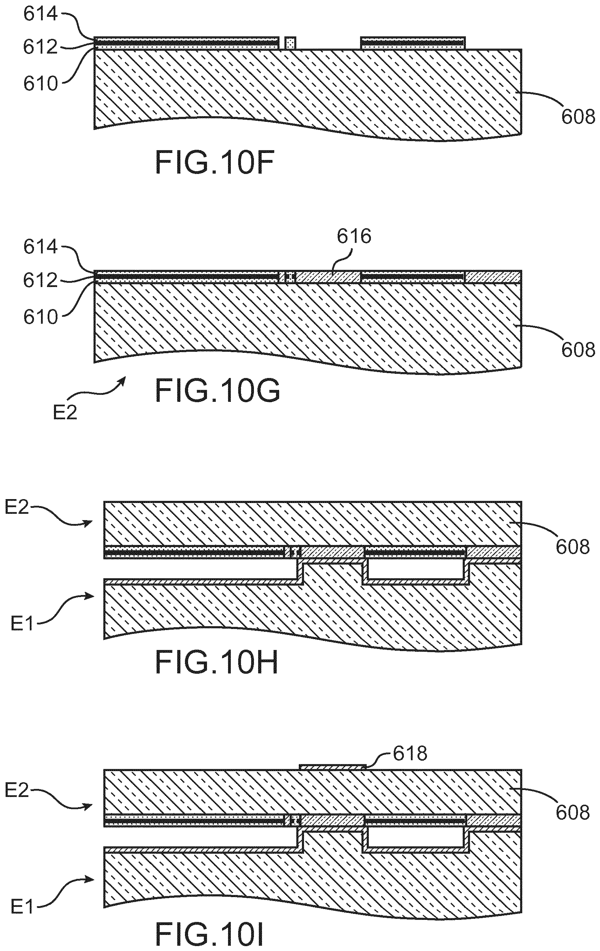

L'élément ainsi réalisé est représenté sur la figure 10F.

Lors d'une étape suivante, on forme une couche de semi-conducteur 616, par exemple du silicium. Puis une étape d'aplanissement par exemple par polissage a lieu de sorte que la couche 616 comble les gravures de l'étape précédente et affleure la couche 614.

L'élément E2 ainsi réalisé est représenté sur la figure 10G. L'élément E2 forme un élément microélectromécanique ou MEMS (Microelectromechanical systems en terminologie anglo-saxonne).

Lors d'une étape suivante, les éléments E1 et E2 sont assemblés. Pour cela, l'élément E2 est retourné, les deux éléments E1 et E2 sont alignés et on effectue un report de l'élément E2 sur l'élément E1 ou socle.

L'assemblage se fait par exemple par collage par scellement direct.

Le socle peut ensuite être aminci ainsi que le substrat 608 par abrasion ("grinding" en terminologie anglo-saxonne), suivi d'un polissage

Par exemple, après amincissement l'élément E2 présente une épaisseur de quelques dizaines de µm et le socle présente une épaisseur de quelques centaines de µm pour assurer la rigidité.

L'élément ainsi réalisé est représenté sur la figure 10H.

Lors d'une étape suivante, on forme une couche de métal 618, par exemple d'or, par exemple par dépôt, sur la face libre de l'élément E2, par exemple ayant une épaisseur de plusieurs centaines de nanomètres, pour réaliser la reprise de contact sur les plots ou pour le scellement d'un capot. Une étape de photolithographie puis de gravure, par exemple par ions réactifs, a lieu pour supprimer les portions de la couche 618 inutiles.

L'élément ainsi réalisé est représenté sur la figure 10I.

Lors d'une étape suivante, on réalise une photolithographie puis une gravure, par exemple une gravure profonde par ions réactifs, de l'élément E2 pour former les moyens de rigidification, la ou les poutres formant bras de levier, le ou les plots de contact.

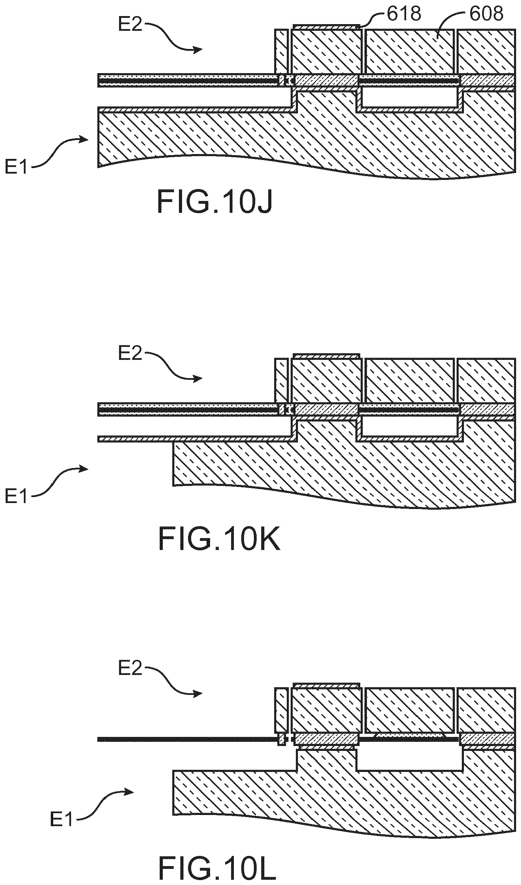

L'élément ainsi réalisé est représenté sur la figure 10J.

Lors d'une étape suivante, on réalise une photolithographie puis une gravure, par exemple une gravure profonde par ions réactifs, du socle afin de réaliser l'ouverture vers l'extérieur permettant à la pression acoustique d'accéder à l'élément sensible.

L'élément ainsi réalisé est représenté sur la figure 10K.

Lors d'une étape suivante, on libère les jauges et l'élément sensible 4 par immersion dans un bain de HF, ou par HF en phase vapeur.

Les moyens de rigidification 12 de l'élément sensible 4 bordent le bord de l'élément sensible.

Le microphone ainsi réalisé est représenté sur la figure 10L.

Un capot peut être ajouté du côté de l'élément sensible.

Avantageusement, on peut prévoir de réaliser des butées pour limiter le déplacement de l'élément sensible et une sollicitation excessive des jauges en cas d'un signal très fort. Ces butées sont par exemple réalisés directement entre les bords extérieur de l'élément sensible et l'élément E1, ceux-sont configurés pour être disposés l'un par rapport à l'autre pour limiter le mouvement dans les deux sens dans la direction Z. la distance entre l'élément sensible et l'élément E1 est définie par l'épaisseur de la couche 610. Au niveau des butées, l'élément sensible ne peut pas se déplacer plus que l'épaisseur de l'oxyde 610.

Selon un autre exemple de réalisation, un procédé similaire à celui décrit dans le document EP2541222. Un seul substrat est mis en oeuvre avec une croissance par épitaxie de semi-conducteur. Pour cela, on utilise un substrat SOI dont le bulk 608 forme le socle, la couche 612 sera traitée suivant les mêmes étapes que décrites ci-dessus. La couche d'oxyde 610 remplit la fonction de la couche 604, et permet après libération la formation des cavités comme celles formées à l'étape 10B.

Ensuite pour réaliser les moyens de rigidification, la ou les poutres et le ou les plots de contact, on réalise une épitaxie de quelques dizaines de µm sur la couche contenant les jauges.

Grâce à l'invention, on peut donc réaliser des microphones hautes performances, et diminuer le coût des microphones actuels, notamment en réduisant leur encombrement.

## Revendications

1. Capteur de pression dynamique de type MEMS et/ou NEMS comportant :
- un support (2, 502),
- au moins un élément sensible rigide (4, 504) ancré au support (2, 502) au niveau au moins d'une zone d'ancrage, ledit élément sensible (4, 504) comportant des première et deuxième faces parallèles destinées à être soumises à des pressions, ledit élément sensible (4, 504) étant apte à avoir un déplacement hors-plan par rapport au support (2, 502) dans une direction de détection sous l'effet d'une différence de pression entre les première et deuxième faces,
- des moyens d'ancrage de l'élément sensible au support, lesdits moyens d'ancrage comportant au moins une poutre (20, 520) articulée en rotation sur le support (2, 502) par une articulation (22) dont l'axe de rotation (W) est parallèle au plan du capteur.
- des moyens de détection (8, 508) d'un effort appliqué à l'élément sensible (4, 504) par la différence de pression.

2. Capteur de pression dynamique selon la revendication 1, dans lequel l'élément sensible (4, 504) comporte une membrane (10, 510) et une structure de rigidification (12) solidarisée à la membrane de sorte à la rigidifier.

3. Capteur de pression dynamique selon la revendication 2 dans lequel la membrane (10, 510) a une épaisseur de quelques dizaines de nanomètres à quelques centaines de nanomètres, avantageusement de 100 nanomètres à 500 nanomètres, et les moyens de rigidification (12, 5012) ont une épaisseur de quelques micromètres à quelques dizaines de micromètres et avantageusement de 5 µm à 30 µm.

4. Capteur de pression dynamique selon l'une des revendications 1 à 3, dans lequel la poutre (520) est fixée sur l'élément sensible (504) de sorte que l'élément sensible (504) se déplace en rotation par rapport au support (502) autour dudit axe de rotation (W), les moyens d'ancrage comportant avantageusement plusieurs poutres (520) parallèles les unes aux autres.

5. Capteur de pression dynamique selon la revendication 2 et 4, dans lequel la ou les poutres (520) forment également au moins une partie de la structure de rigidification.

6. Capteur de pression dynamique selon l'une des revendications 1 à 5, dans lequel la poutre (20) est en outre articulée en rotation et translation sur l'élément mobile (4) par une articulation supplémentaire (28) dont l'axe de rotation (W') et l'axe de translation sont parallèles au plan du capteur, l'articulation supplémentaire (28) comportant avantageusement au moins une lame perpendiculaire à l'axe de la poutre et à un plan du capteur.

7. Capteur de pression dynamique selon la revendication 6, dans lequel les moyens d'ancrage comportent plusieurs poutres disposées de sorte à limiter des mouvements de l'élément sensible dans des directions différentes de la direction de détection.

8. Capteur de pression dynamique selon la revendication 1, dans lequel le détecteur comporte au moins une jauge de contrainte, la au moins une jauge de contrainte étant avantageusement choisie parmi une jauge piézoélectrique, une jauge piézorésistive et une jauge résonante.

9. Capteur de pression dynamique selon l'une des revendications 1 à 8, dans lequel les moyens de détection comportent un ensemble comprenant au moins une jauge (26) située au niveau de l'articulation (22) entre la au moins une poutre (20) et le support (2) et suspendue entre la poutre (20) et le support (2), la jauge (26) étant décalée selon une direction perpendiculaire au plan, par rapport à l'axe de rotation (W), les moyens de détection comportant avantageusement deux ensembles d'au moins une jauge (26), lesdits ensembles étant montés en différentiel.

10. Capteur de pression dynamique selon la revendication 9, dans lequel l'ensemble ou les ensembles comportent plusieurs jauges (26) disposées parallèlement les unes par rapport aux autres et connectées électriquement en série.

11. Capteur de pression dynamique selon l'une des revendications 1 à 10, comportant des moyens de blocage aptes à au moins limiter des mouvements de l'élément sensible dans des directions différentes de la direction de détection.

12. Capteur de pression dynamique selon la revendication 11, en combinaison avec la revendication 2, dans lequel la membrane est rattachée en des zones discrètes au support par des éléments offrant une rigidité importante dans les directions autres que la direction de détection, lesdits éléments rattachant la membrane au support en des zones discrètes étant avantageusement d'un seul tenant avec la membrane et présentent une dimension transversale de quelques centaines de nm.

13. Capteur de pression dynamique selon l'une des revendications précédentes, dans lequel les moyens de rigidification comportent des poutres réparties sur la membrane, les moyens de rigidification comportant avantageusement des poutres (16) disposées au ras des bords de la membrane (10).

14. Capteur de pression dynamique selon l'une des revendications précédentes, dans lequel l'élément sensible (4, 504) est séparé au moins en partie du support (2, 502) par gravure, avantageusement par gravure profonde parions réactifs.

15. Microphone comportant au moins un capteur de pression selon l'une des revendications 1 à 14, l'élément sensible présentant avantageusement une rigidité telle que le premier mode propre de déformation de l'élément sensible est repoussé au-dessus de la fréquence de résonance du microphone, qui est elle-même repoussée au-dessus de la bande passante souhaitée pour le fonctionnement du microphone.

## Patentansprüche

1. Dynamischen Drucksensor vom Typ MEMS oder/und NEMS, umfassend:
- einen Träger (2, 502),
- wenigstens ein steifes empfindliches Element (4, 504), das an dem Träger (2, 502) auf Höhe von wenigstens einem Verankerungsbereich verankert ist, wobei das empfindliche Element (4, 504) eine erste und eine zweite Seite umfasst, die parallel und dazu bestimmt sind, Drücken ausgesetzt zu werden, wobei das empfindliche Element (4, 504) dazu geeignet ist, eine Verlagerung aus der Ebene heraus in Bezug auf den Träger (2, 502) in eine Detektionsrichtung unter der Wirkung von einem Differenzdruck zwischen der ersten und der zweiten Seite aufzuweisen,
- Verankerungsmittel des empfindlichen Elements am Träger, wobei die Verankerungsmittel wenigstens einen Balken (20, 520) umfassen, der an dem Träger (2, 502) drehbar durch ein Gelenk (22) gelagert ist, dessen Rotationsachse (W) parallel zu der Ebene des Sensors verläuft,
- Detektionsmittel (8, 508) für eine durch den Differenzdruck auf das empfindliche Element (4, 504) ausgeübte Belastung.

2. Dynamischen Drucksensor nach Anspruch 1, wobei das empfindliche Element (4, 504) eine Membran (10, 510) und eine Versteifungsstruktur (12) umfasst, die mit der Membran fest verbunden ist, um diese zu versteifen.

3. Dynamischen Drucksensor nach Anspruch 2, wobei die Membran (10, 510) eine Dicke von einigen zehn Nanometern bis zu einigen hundert Nanometern aufweist, bevorzugt von 100 nm bis 500 nm, und die Versteifungsmittel (12, 5012) eine Dicke von einigen Mikrometern bis zu einigen zehn Mikrometern und vorzugsweise von 5 µm bis 30 µm aufweisen.

4. Dynamischen Drucksensor nach einem der Ansprüche 1 bis 3, wobei der Balken (520) an dem empfindlichen Element (504) so fixiert ist, dass das empfindliche Element (504) sich in Bezug zu dem Träger (502) um die Rotationsachse (W) drehend verlagert, wobei die Verankerungsmittel bevorzugt mehrere Balken (520) umfassen, die zueinander parallel sind.

5. Dynamischen Drucksensor nach Anspruch 2 und 4, wobei der oder die Balken (520) weiterhin wenigstens einen Teil der Versteifungsstruktur bilden.

6. Dynamischen Drucksensor nach einem der Ansprüche 1 bis 5, wobei der Balken (20) weiterhin drehbar und verschiebbar an dem empfindlichen Element (4) durch ein zusätzliches Gelenk (28) gelagert ist, dessen Rotationsachse (W') und dessen Translationsachse parallel zu der Ebene des Sensors verlaufen, wobei das zusätzliche Gelenk (28) bevorzugt wenigstens ein Blatt umfasst, das senkrecht zu der Achse des Balkens und einer Ebene des Sensors verläuft.

7. Dynamischen Drucksensor nach Anspruch 6, wobei die Verankerungsmittel mehrere Balken umfassen, die so angeordnet sind, dass sie Bewegungen des empfindlichen Elements in von der Detektionsrichtung verschiedenen Richtungen begrenzen.

8. Dynamischen Drucksensor nach Anspruch 1, wobei der Detektor wenigstens einen Dehnungmeßstreife umfasst, wobei die wenigstens ein Dehnunmeßstreife bevorzugt ausgewählt ist aus einer piezoelektrischen Messeinrichtung, einer piezoresistiven Messeinrichtung und einer Resonanz-Messeinrichtung.

9. Dynamischen Drucksensor nach einem der Ansprüche 1 bis 8, wobei die Detektionsmittel eine Anordnung umfassen, die wenigstens eine Messeinrichtung (26) umfasst, welche auf Höhe von dem Gelenk (22) zwischen dem wenigstens einen Balken (20) und dem Träger (2) gelagert ist, und zwischen dem Balken (20) und dem Träger (2) aufgehängt ist, wobei die Messeinrichtung (26) längs einer Richtung senkrecht zur Ebene versetzt ist, in Bezug zur Rotationsachse (W), wobei die Detektionsmittel bevorzugt zwei Anordnungen von wenigstens einer Messeinrichtung (26) umfassen, wobei die Anordnungen differenziell montiert sind.

10. Dynamischen Drucksensor nach Anspruch 9, wobei die Anordnung oder die Anordnungen mehrere Messeinrichtungen (26) umfasst/umfassen, die zueinander parallel angeordnet und elektrisch in Reihe geschaltet sind.

11. Dynamischen Drucksensor nach einem der Ansprüche 1 bis 10, umfassend Blockiermittel, die dazu geeignet sind, wenigstens Bewegungen des empfindlichen Elements in von der Detektionsrichtung verschiedenen Richtungen zu begrenzen.

12. Dynamischen Drucksensor nach Anspruch 11 in Kombination mit Anspruch 2, wobei die Membran in diskreten Bereichen an dem Träger befestigt ist, durch Elemente, welche eine wesentliche Steifigkeit in den Richtungen bieten, die andere sind als die Detektionsrichtung, wobei die Elemente, welche die Membran an dem Träger in diskreten Bereichen befestigen, bevorzugt zusammenhängend mit der Membran ausgebildet sind und eine transversale Abmessung von einigen hundert Nanometern aufweisen.

13. Dynamischen Drucksensor nach einem der vorhergehenden Ansprüche, wobei die Versteifungsmittel Balken umfassen, die auf der Membran verteilt sind, wobei die Versteifungsmittel bevorzugt Balken (16) umfassen, die auf Höhe der Ränder der Membran (10) angeordnet sind.

14. Dynamischen Drucksensor nach einem der vorhergehenden Ansprüche, wobei das empfindliche Element (4, 504) wenigstens teilweise von dem Träger (2, 502) durch Ätzen getrennt ist, bevorzugt durch tiefes Ätzen durch reaktive Ionen.

15. Mikrofon, umfassend wenigstens einen Drucksensor nach einem der Ansprüche 1 bis 14, wobei das empfindliche Element bevorzugt eine Steifigkeit aufweist, so dass die erste Verformungs-Eigenmode des empfindlichen Elements über die Resonanzfrequenz des Mikrofons hinaus verschoben ist, die selbst über den Durchlassbereich hinaus verschoben ist, der für das Funktionieren des Mikrofons erwünscht ist.

## Claims

1. Dynamic pressure sensor of MEMS and/or NEMS type comprising:
- a support (2, 502),
- at least one rigid sensitive element (4, 504) anchored to the support (2, 502) at the level of at least one anchoring zone, said sensitive element (4, 504) comprising parallel first and second faces intended to be subjected to pressures, said sensitive element (4, 504) being capable of having an out-of-plane displacement with respect to the support (2, 502) in a detection direction under the effect of a pressure difference between the first and second faces,
- means for anchoring the sensitive element to the support, said anchoring means comprising at least one beam (20, 520) rotationally articulated on the support (2, 502) by an articulation (22) of which the axis of rotation (W) is parallel to the plane of the sensor,
- means (8, 508) for detecting a force applied to the sensitive element by the pressure difference.

2. Dynamic pressure sensor according to claim 1, in which the sensitive element (4, 504) comprises a membrane (10, 510) and a rigidification structure (12) secured to the membrane so as to make it rigid.

3. Dynamic pressure sensor according to claim 2, in which the membrane (10, 510) has a thickness from several tens of nanometers to several hundreds of nanometers, advantageously from 100 nanometers to 500 nanometers, and the rigidification structure (12, 5012) has a thickness from several micrometers to several tens of micrometers, advantageously from 5 µm to 30 µm.

4. Dynamic pressure sensor according to one of claims 1 to 3, in which the beam (520) is fixed onto the sensitive element (504) such that the sensitive element (504) is rotationally displaced with respect to the support (502) around said axis of rotation (W), the anchoring means advantageously comprising several beams (520) parallel to each other.

5. Dynamic pressure sensor according to claim 2 and 4, in which the beam(s) (520) also form(s) at least a part of the rigidification structure.

6. Dynamic pressure sensor according to one of claims 1 to 5, in which the beam (20) is moreover rotationally and translationally articulated on the moving element (4) by an additional articulation (28) of which the axis of rotation (W') and the axis of translation are parallel to the plane of the sensor, the additional articulation (28) advantageously comprising at least one strip perpendicular to the axis of the beam and to a plane of the sensor.

7. Dynamic pressure sensor according to claim 6, in which the anchoring means comprise several beams arranged so as to limit movements of the sensitive element in directions different from the detection direction.

8. Dynamic pressure sensor according to claim 1, in which the detector comprises at least one strain gauge, said at least one strain gauge is selected from a piezoelectric gauge, a piezoresistive gauge and a resonant gauge.

9. Dynamic pressure sensor according to one of claims 1 to 8, in which the detection means comprise an assembly including at least one gauge (26) situated at the articulation (22) between at least one beam (20) and the support (2) and suspended between the beam (20) and the support (2), the gauge (26) being shifted along a direction perpendicular to the plane, with respect to the axis of rotation (W), the detection means advantageously comprising two assemblies of at least one gauge, said assemblies being mounted differentially.

10. Dynamic pressure sensor according to claim 9, in which the assembly or the assemblies comprise several gauges (26) arranged parallel to each other and electrically connected in series.

11. Dynamic pressure sensor according to one of claims 1 to 10, comprising blocking means configured to at least limit movements of the sensitive element in directions different from the detection direction.

12. Dynamic pressure sensor according to claim 11 in combination with claim 2, in which the membrane is attached in distinct zones to the support by elements offering considerable rigidity in directions other than the detection direction, said elements for attaching the membrane to the support in distinct zones being advantageously of one piece with the membrane and having a transversal dimension of several hundreds of nm.

13. Dynamic pressure sensor according to one of the previous claims, in which the rigidification structure comprises beams spread out on the membrane, the rigidification structure comprises advantageously beams (16) arranged flush with the edges of the membrane (10).

14. Dynamic pressure sensor according to one of the previous claims, in which the sensitive element (4, 504) is separated at least in part from the support (2, 502) by etching, advantageously by deep reactive ion etching.

15. Microphone comprising at least one pressure sensor according to one of claims 1 to 14, the sensitive element having a rigidity such that the first fundamental mode of deformation of the sensitive element is pushed above the resonance frequency of the microphone, which is itself pushed above the pass band desired for the operation of the microphone.
